# FASCICULE DE BREVET EUROPEEN

(11) **EP 3 515 855 B1**
(45) Date de publication et mention de la délivrance du brevet: **24.06.2020**
(21) Numéro de dépôt: 17783934.7
(22) Date de dépôt: 21.09.2017
(51) Int. Cl.: B66F 11/04, B66F 17/00, G05G 9/047, G05G 5/03, G06F 3/01, H01H 3/00, B66C 13/40, E02F 9/20

(54) **SYSTEME COMPORTANT UN POSTE DE COMMANDE ET UN DISPOSITIF COMMANDÉ A SECURITE DE FONCTIONNEMENT AMELIORÉE**
SYSTEM MIT EINER KONTROLLSTATION UND GESTEUERTE VORRICHTUNG MIT ERHÖHTER BETRIEBSSICHERHEIT
SYSTEM COMPRISING A CONTROL STATION AND A CONTROLLED DEVICE WITH IMPROVED OPERATING SAFETY

(30) Priorité: 21.09.2016 FR 1658880
(43) Date de publication de la demande: 31.07.2019
(73) Titulaire: Commissariat à l'énergie atomique et aux énergies alternatives, 75015 Paris (FR)
(72) Inventeur: ECK, Laurent, 28410 Saint Lubin de la Haye (FR); PANËELS, Sabrina, 94320 Thiais (FR); ANASTASSOVA, Margarita, 91620 Nozay (FR); SOUVESTRE, Florent, 91400 Orsay (FR); LEMARCHAND, Ludovic, 69600 Oullins (FR); DELAHUNT, Andrew, 69002 Lyon (FR)
(74) Mandataire: Brevalex
(86) Numéro de dépôt international: PCT/FR2017/052538
(87) Numéro de publication internationale: WO 2018/055295

(56) Documents cités:
- WO-A1-2012/168041
- WO-A1-2016/050717
- DE-A1-102012 021 422
- US-A1- 2010 302 017
- US-A1- 2016 179 128

## Description

### DOMAINE TECHNIQUE ET ÉTAT DE LA TECHNIQUE ANTÉRIEURE

La présente invention se rapporte à un système comportant un poste de commande et au moins un dispositif commandé, commandé par ledit poste de commande, offrant une sécurité de fonctionnement améliorée.

Un exemple de tels systèmes sont les plateformes élévatrices mobiles de personnel (désignées aussi par l'acronyme PEMP), communément appelées nacelles élévatrices, comportent une structure extensible montée sur un châssis porteur automoteur ou non, pour assurer le positionnement en hauteur d'une plateforme de travail servant de poste de travail à une ou plusieurs personnes pour exécuter une tâche en hauteur, par exemple effectuer des travaux de peinture ou de réparation sur une façade d'un immeuble. La structure extensible est par exemple formée de un ou plusieurs bras articulés et/ou télescopiques.

Une nacelle élévatrice comporte un pupitre ou poste de commande, positionné sur la plateforme, permettant de commander l'ensemble de la nacelle élévatrice, à la fois le déplacement du châssis par rapport au sol, le déploiement de la structure extensible et son déplacement en rotation par rapport au châssis autour d'un axe vertical. Les pupitres de commande existants mettent en œuvre un ou plusieurs joysticks et/ou des commutateurs.

Une nacelle élévatrice peut comporter plus d'un poste de commande. Elle est généralement équipée d'un poste de commande auxiliaire accessible depuis le sol qui comprend des commandes pour ramener la plateforme au sol en cas de nécessité, par exemple si l'utilisateur situé dans la plateforme est dans l'incapacité d'utiliser le poste de commande de la plateforme. Le poste de commande auxiliaire comporte en général des moyens de verrouillage de la nacelle élévatrice, tels qu'un interrupteur à clé et un sélecteur de poste de commande qui détermine de manière exclusive celui des postes de commandes qui est actif et contrôle les déplacements de la machine. Dans la suite de la demande, le poste de commande désigne le poste de commande sur la plateforme. Il sera précisé quand il s'agit du poste de commande auxiliaire.

Les nacelles élévatrices sont en général utilisées dans des zones de chantier.

Le poste de commande d'une nacelle élévatrice n'est pas positionné à l'intérieur d'une cabine mais est positionné sur la plateforme ouverte et est directement exposé à l'environnement de travail des utilisateurs.

De manière connue l'utilisateur détermine l'état de la nacelle élévatrice en se basant sur des informations auditives et des informations visuelles.

Concernant les informations auditives, il peut être prévu que le poste de commande émette des signaux sonores, tels que des bips pour signaler un état particulier de la nacelle élévatrice, mais ils peuvent se révéler difficiles à distinguer des autres bruits du chantier et des autres machines qui sont en cours d'utilisation.

Concernant les informations visuelles, l'utilisateur peut réaliser un contrôle visuel direct de la nacelle élévatrice ou à travers un écran. L'utilisateur peut ne pas nécessairement avoir une vision complète de la nacelle élévatrice. Il peut être prévu d'allumer des voyants lumineux, mais ceux-ci peuvent être rendus peu lisibles par l'environnement lumineux, notamment en plein soleil et par les dégradations provoquées par les salissures.

Par ailleurs, les nacelles élévatrices sont utilisées par des personnes en vue d'effectuer des travaux, il ne s'agit pas de conducteurs de nacelles élévatrices. De plus, les nacelles élévatrices peuvent être utilisées par des personnes ayant l'habitude de les utiliser, mais également par des débutants ou des personnes utilisant celles-ci de manière très occasionnelle. Il est donc souhaitable que les messages envoyés à l'utilisateur soient facilement interprétables.

Le document US2016/0179128 décrit un système selon le préambule de la revendication 1.

### EXPOSÉ DE L'INVENTION

C'est par conséquent un but de la présente invention d'offrir un système comportant un poste de commande et un dispositif commandé, d'utilisation simple et intuitive et capable de communiquer avec l'utilisateur de manière efficace et sûre.

Le dispositif commandé peut être de différents types. Par exemple, il peut s'agir d'une nacelle élévatrice, d'une grue, d'une pelle mécanique, d'un camion grue, un entrepôt... un bras robotisé par exemple dans une enceinte de centrale nucléaire, un drone.

Dans un mode de réalisation, le poste de commande est solidaire du dispositif commandé, par exemple un poste de commande de nacelle élévatrice. Dans un autre mode de réalisation, le poste de commande est désolidarisé du dispositif commandé et peut être situé à distance du dispositif à commander, par exemple un poste de commande d'un drone, le poste de commande pouvant être portatif.

Le but énoncé ci-dessus est atteint par système comportant un poste de commande et un dispositif commandé, ledit poste de commande comportant au moins une interface haptique à au moins un degré de liberté muni d'un effecteur, destinée à contrôler au moins une action du dispositif commandé et un contrôleur envoyant des ordres à l'interface haptique en fonction de l'état du dispositif commandé, sa position dans l'espace, et de données contextuelles, afin de transmettre des messages détectables et compréhensibles à l'utilisateur, à partir de retours haptiques adéquats et contextualisés.

Le contrôleur peut également prendre en compte des paramètres d'actionnement de l'interface, tels que la position de l'effecteur et/ou la vitesse de déplacement de l'effecteur.

Le poste de commande sollicite donc au moins en partie l'utilisateur au moins en partie de manière haptique et non uniquement de manière visuelle et/ou auditive. Les messages transmis par l'interface sont identifiables car ils se distinguent des sons ambiants, notamment ceux existants sur un chantier, et ils n'ont pas les inconvénients des signaux lumineux exposés ci-dessus. La stimulation des sens haptiques permet de ne pas surcharger davantage l'attention visuelle et l'attention auditive de l'utilisateur.

De manière très avantageuse, l'interface peut générer au moins une stimulation kinesthésique et au moins une stimulation vibrotactile, en fonction du type de message à transmettre.

Par exemple, l'interface est de type joystick à deux degrés de liberté. Les stimulations kinesthésiques sont avantageusement générées par des moyens magnétorhéologiques.

Le contrôleur pilote les effets haptiques dans le contexte de manipulation d'une nacelle élévatrice.

Grâce à l'invention, on utilise une modalité alternative d'information personnelle et non exploitée aujourd'hui dans le domaine des nacelles élévatrices. Le langage haptique a pour but d'une part de résoudre des situations d'incompréhension en fournissant des informations, par exemple en avertissant l'utilisateur que la pédale d'homme-mort n'a pas été actionnée, expliquant ainsi pourquoi il n'y a aucun mouvement, et d'autres part de réduire les situations à risque, par exemple lorsque les limites de l'enveloppe de sécurité de la nacelle élévatrice ont été atteintes.

En outre, puisque l'interface est programmable, les motifs haptiques peuvent être facilement modifiés et ajustés. Il est alors possible de proposer plusieurs modes de fonctionnement en fonction des profils des utilisateurs, par exemple le contrôleur peut comporter un programme de contrôle de l'interface haptique adapté à un débutant ou un utilisateur occasionnel, et un programme adapté à un utilisateur expérimenté.

La présente invention a alors pour objet un système comportant un poste de commande et un dispositif commandé par ledit poste de commande, ledit poste de commande comportant au moins un dispositif de commande destiné à contrôler au moins une action du dispositif commandé, ledit dispositif de commande comprenant un interface haptique comprenant au moins un élément d'interaction avec l'utilisateur, et un contrôleur configuré pour envoyer des ordres à l'interface haptique de générer des stimulations haptiques au niveau de l'élément d'interaction avec l'utilisateur sur la base au moins d'informations relatives à un état du dispositif commandé et/ou de son environnement, ladite interface haptique comporte des moyens de génération d'une stimulation kinesthésique, le système comportant également des moyens de mesure de l'orientation relative de l'élément d'interaction avec l'utilisateur et d'au moins une partie du dispositif commandé, et le contrôleur étant configuré de sorte que, sur la base des informations fournies par les moyens de mesure de l'orientation relative entre le dispositif de commande et le dispositif commandé, il commande les moyens de génération d'une stimulation kinesthésique de sorte que le dispositif de commande ne soit déplaçable que selon une direction parallèle à la direction de déplacement de ladite au moins partie du dispositif commandé.

Les moyens de mesure de l'orientation relative entre l'élément d'interaction avec l'utilisateur et la au moins une partie du dispositif commandé peuvent mesurer la position relative de l'élément d'interaction avec l'utilisateur et d'une partie au moins du dispositif commandé. Le contrôleur peut relier la direction et le sens de l'élément d'interaction avec l'utilisateur et le sens de déplacement de la au moins une partie du dispositif commandé.

Les moyens de mesure de l'orientation relative entre l'élément d'interaction avec l'utilisateur et la au moins une partie du dispositif commandé comportent par exemple au moins un capteur fournissant une information d'orientation de l'élément d'interaction avec l'utilisateur, et au moins un capteur fournissant une information d'orientation de ladite au moins une partie commandée.

L'interface haptique comporte avantageusement des moyens de génération d'une stimulation kinesthésique. Le contrôleur peut être configuré pour prendre en compte au moins la position de l'élément d'interaction avec l'utilisateur et/ ou des moyens de génération d'une stimulation vibrotactile.

Par exemple, les moyens de génération d'une stimulation kinesthésique comportent au moins un frein magnétorhéologique et les moyens de génération une stimulation vibrotactile comportent au moins un actionneur vibrant. L'actionneur vibrant est de préférence positionné sur l'élément d'interaction avec l'utilisateur.

Le poste de commande peut comporter d'autres dispositifs de commande comportant ou non une interface haptique.

La présente invention a également pour objet une nacelle élévatrice comportant un châssis, une tourelle articulée sur le châssis, ladite tourelle comprenant une structure extensible et une plateforme portée par la structure extensible et au moins un poste de commande selon l'invention disposé sur la plateforme.

Le système comporte avantageusement des moyens de détection de l'état de ladite nacelle élévatrice et/ou de sa disposition par rapport à l'environnement extérieur et des moyens de transmission des signaux émis par les moyens de détection au contrôleur de sorte qu'il prenne compte de ces signaux pour commander l'interface haptique.

Le dispositif commandé peut comporter un châssis et au moins une structure articulée, une plateforme portée par la structure articulée et au moins un poste de commande selon l'invention disposé sur la plateforme. Les moyens de détection peuvent comporter des moyens de mesure du dévers du châssis, et/ou un ou des capteurs de détection de la configuration de la structure articulée, et/ou un ou des capteurs de position de la structure articulée par rapport au châssis, et/ou un ou des capteurs de charge et/ou un ou des capteurs d'obstacle.

Le contrôleur peut comporter des abaques sur une enveloppe de sécurité dudit dispositif commandé et/ou sur au moins une limite entre au moins deux zones de position de la structure articulée.

Le dispositif commandé peut être une nacelle élévatrice.

La présente invention a également pour objet un procédé de fonctionnement d'un système selon l'invention, comportant les étapes :
a) mesure de l'orientation relative entre l'élément d'interaction avec l'utilisateur et au moins une partie du dispositif commandé,
b) prise en compte par le contrôleur de ladite orientation relative mesurée à l'étape a),
c) envoi d'ordre aux moyens de stimulation haptiques,
d) génération d'une stimulation kinesthésique au niveau de l'élément d'interaction avec l'utilisateur, de sorte que l'élément d'interaction avec l'utilisateur ne soit déplaçable que selon une direction parallèle à la direction de déplacement de la au moins une partie du dispositif commandé.

Par exemple, lors de l'étape a) le contrôleur prend en compte la position de l'élément d'interaction avec l'utilisateur.

Dans un mode de fonctionnement dans lequel l'élément d'interaction comporte une position repos et est apte à être déplacé au moins le long d'une direction donnée à partir de la position repos dans un premier sens et dans un deuxième sens opposé au premier sens, le contrôleur peut envoyer des ordres aux moyens de stimulation haptiques de générer un première stimulations haptique lors du déplacement de l'élément d'interaction avec l'utilisateur dans le premier sens et une deuxième stimulation haptique lors du déplacement de l'élément d'interaction avec l'utilisateur dans le deuxième sens, les première et deuxième stimulations haptiques étant différentes.

Lors d'un fonctionnement conforme du dispositif commandé, ledit contrôleur peut envoyer des ordres aux moyens de stimulation kinesthésique d'appliquer un effort résistant à l'élément d'interaction avec l'utilisateur, tant qu'il n'est pas déplacé suffisamment pour provoquer une action du dispositif commandé, et de simuler des crans lorsque le déplacement de l'élément d'interaction avec l'utilisateur provoque une action du dispositif commandé

Dans un mode de réalisation dans lequel le dispositif commandé comporte un châssis et au moins une structure articulée, une plateforme portée par la structure articulée:
- le contrôleur détermine une enveloppe de sécurité du dispositif commandé et/ou la présence d'obstacles,
- au-delà d'une configuration donnée de ladite plateforme par rapport à l'enveloppe de sécurité de la plateforme et/ou la présence d'obstacles, ledit contrôleur envoie des ordres aux moyens de stimulation haptiques de générer au moins une stimulation haptique pour alerter l'utilisateur.

La stimulation haptique comporte avantageusement une stimulation kinesthésique forçant l'utilisateur à appliquer un effort supplémentaire à l'élément d'interaction et une stimulation vibrotactile.

Le contrôleur peut envoyer un ordre de simuler une butée pour l'élément d'interaction, lorsque l'enveloppe de sécurité est atteinte et/ou lorsqu'au moins un des vérins d'actionnement de la structure élévatrice est en fin de course.

Le contrôleur peut tenir compte d'au moins une information relative à l'état du dispositif commandé et/ou de son environnement une stimulation haptique étant générée en tenant compte de ladite information.

Le contrôleur peut déterminer au moins une limite entre au moins deux zones de déploiement de la structure articulée, et envoie des ordres aux moyens de génération d'une stimulation haptique d'envoyer un message haptique à l'utilisateur pour l'informer du fait que ladite au moins une limite est proche ou franchie.

La présente invention a également pour objet un procédé de fonctionnement d'une nacelle élévatrice selon l'invention, comportant les étapes :
- prise en compte par le contrôleur d'au moins une information relative à un état de ladite nacelle élévatrice et/ou de son environnement,
- envoi d'ordre aux moyens de stimulation haptiques,
- génération d'une stimulation haptique au niveau de l'élément d'interaction avec l'utilisateur.

Selon une caractéristique additionnelle, lors d'un fonctionnement conforme de la nacelle élévatrice, le contrôleur peut envoyer des ordres aux moyens de stimulation kinesthésique d'appliquer un effort résistant à l'élément d'interaction avec l'utilisateur tant qu'il n'est pas déplacé suffisamment pour provoquer une action de la nacelle élévatrice, et de simuler des crans lorsque le déplacement de l'élément d'interaction avec l'utilisateur provoque une action de la nacelle élévatrice

Selon une autre caractéristique additionnelle, le contrôleur peut déterminer une enveloppe de sécurité de la nacelle élévatrice et/ou la présence d'obstacles,
- au-delà d'une configuration donnée de ladite plateforme par rapport à l'enveloppe de sécurité de la plateforme et/ou la présence d'obstacles, ledit contrôleur envoie des ordres aux moyens de stimulation haptiques de générer au moins une stimulation haptique pour alerter l'utilisateur. De préférence, la stimulation haptique comporte une stimulation kinesthésique forçant l'utilisateur à appliquer un effort supplémentaire à l'élément d'interaction et une stimulation vibrotactile.

### BRÈVE DESCRIPTION DES DESSINS

La présente invention sera mieux comprise sur la base de la description qui va suivre et des dessins en annexe sur lesquels:
- la figure 1 est une représentation schématique d'une nacelle élévatrice à laquelle s'applique l'invention,
- la figure 2 est une vue en perspective d'un exemple de poste de commande selon l'invention
- les figures 3A et 3B sont des représentations en perspective d'un exemple de réalisation d'une interface haptique pouvant être mise en œuvre dans le poste de commande de la figure 2,
- les figures 4A et 4B sont des vues de détail de la figure 3A, le pommeau étant représenté en transparence sur la figure 3B,
- la figure 5 est une représentation graphique d'un motif haptique adapté à transmettre un message de fonctionnement conforme de la nacelle élévatrice,
- la figure 6 est une représentation graphique d'un motif haptique adapté à transmettre un message d'approche de l'enveloppe de sécurité de la nacelle élévatrice,
- la figure 7 est une représentation graphique d'un motif haptique adapté à transmettre un message d'une situation dangereuse,
- la figure 8 est une représentation graphique d'un motif haptique adapté à transmettre un message de procédure incorrecte.

### EXPOSÉ DÉTAILLÉ DE MODES DE RÉALISATION PARTICULIERS

Dans la description qui va suivre, l'invention est principalement décrite dans une application à une nacelle élévatrice mais ceci n'est en aucun cas limitatif, l'invention pouvant s'appliquer à tout dispositif commandé ou piloté, également désigné « engin télé-opéré », comme par exemple les grues, les pelles mécaniques, les camions grues, les ponts roulants situés par exemple dans une usine, dans un entrepôt ou en extérieur comme sur les ports, des bras robotisés par exemple dans une enceinte de centrale nucléaire, des drones. Cette liste n'est pas limitative.

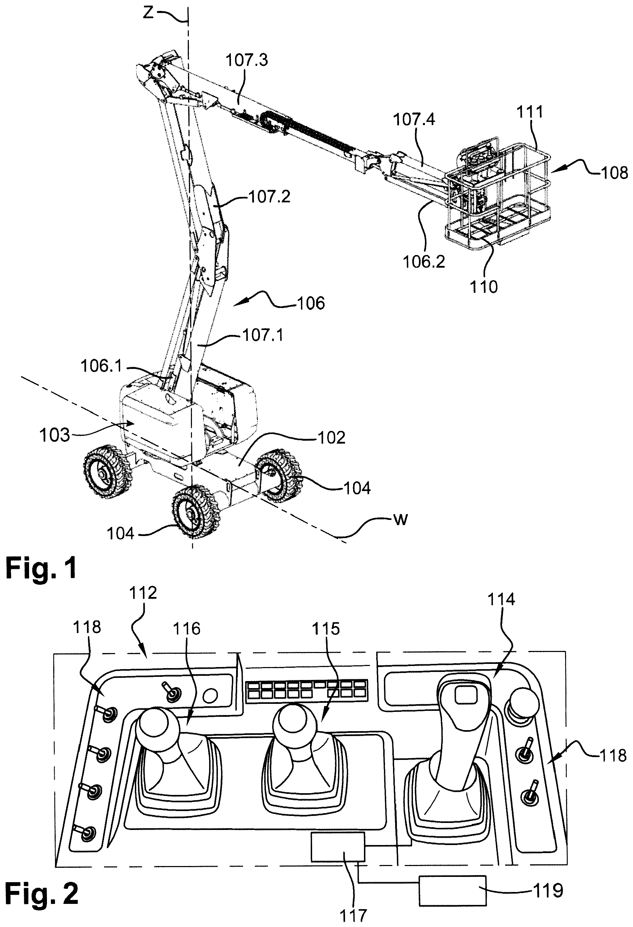

Sur la figure 1, on peut voir un exemple d'une nacelle élévatrice comportant un châssis 102 monté sur quatre roues 104. Le châssis peut être ou non automoteur. Dans le cas où il est automoteur, il comporte par exemple des moyens d'entrainement des roues munis d'un moteur à combustion ou un moteur électrique, de sorte à permettre le déplacement de la nacelle élévatrice.

La nacelle élévatrice comporte une structure extensible 106 solidaire par une extrémité 106.1 au châssis 102 et munie à une autre extrémité 106.2 d'une plateforme 108. La plateforme 108 est destinée à accueillir des êtres humains, elle comporte un plateau 110 et un garde-corps 111.

La structure extensible 106 peut être de différents types, elle peut comporter plusieurs bras articulés et/ou télescopiques ou être de type à ciseaux. Elle peut encore être à mâts verticaux ou tout autre système articulé.

Dans l'exemple représenté, la structure extensible 106 comporte 4 bras articulés 107.1, 107.2, 107.3, 107.4. La nacelle est solidaire du bras 107.4 de telle sorte que son plateau reste en position horizontale quelle que soit la position relative des bras articulés. Dans cet exemple, le bras 107.3 est en outre télescopique.

Le déplacement des bras les uns par rapport aux autres est par exemple obtenu au moyen de vérins hydrauliques ou électriques.

Dans l'exemple représenté, la structure extensible 106 est montée sur une tourelle 103 mobile en rotation par rapport au châssis 102autour d'un axe vertical Z.

La nacelle élévatrice comporte également un poste de commande ou pupitre de commande 112 positionné sur la plateforme et à partir duquel l'utilisateur va commander la position de la plateforme dans l'espace.

Sur la figure 2, on peut voir une représentation schématique d'un poste de commande de plateforme. Dans l'exemple représenté non limitatif, le poste de commande comporte trois dispositifs de commande de type joystick 114, 115, 116 et des dispositifs de commande de type commutateurs 118.

Le poste de commande et ses dispositifs de commande permettent de commander, entre autre, le déplacement du châssis sur le sol, le déploiement de la structure extensible 106 et la rotation de la tourelle 103 autour de l'axe Z.

Le poste de commande 112 selon l'invention comporte au moins une interface haptique. Dans l'exemple représenté le dispositif de commande 114 est une interface haptique. Les autres dispositifs de commande sont de type connus. Mais il sera compris que le poste de commande selon l'invention peut comporter plusieurs dispositifs de commande haptiques à un ou deux degrés de liberté, voire uniquement des dispositifs de commande haptiques à un ou deux degrés de liberté.

Dans la présente demande, on désigne par « interface haptique » tout dispositif comportant un élément d'interaction avec un utilisateur ou effecteur destiné à être manipulé par l'utilisateur pour transmettre des commandes à un système, des moyens aptes à envoyer à l'utilisateur des stimulations haptiques à travers l'effecteur en fonction, par exemple de la position de l'effecteur et d'informations extérieures, et un contrôleur commandant les moyens de stimulation haptiques en fonction de la position de l'effecteur et des informations par exemple fournies par des capteurs ou des abaques enregistrés sur les conditions de fonctionnement de la nacelle élévatrice.

Le contrôleur est désigné par la référence 117.

Les capteurs fournissant des informations sur l'état de la plateforme et des informations contextuelles sont désignés de manière générale par la référence 119. Il peut s'agir à titre d'exemple non limitatif, d'un ou plusieurs capteurs angle de dévers, d'un ou plusieurs capteurs d'obstacle, de capteurs de fin de course de vérin, de capteurs de la position angulaire de la tourelle par rapport au châssis,

Les stimulations tactiles comportent notamment des stimulations kinesthésiques qui sont relatives aux mouvements et des stimulations vibrotactiles qui sont générées par des vibrations.

Les stimulations kinesthésiques sont par exemple générées par un effort résistant (interface haptique passive) ou un effort moteur (interface haptique active). De manière préférentielle, une interface haptique passive est mise en œuvre pour la stimulation kinesthésique car ce type d'interface est sécuritaire pour l'utilisateur. Elle peut en effet s'opposer à un effort très important de l'utilisateur mais elle ne peut en aucun cas générer par elle-même un déplacement de l'effecteur non commandé par l'utilisateur.

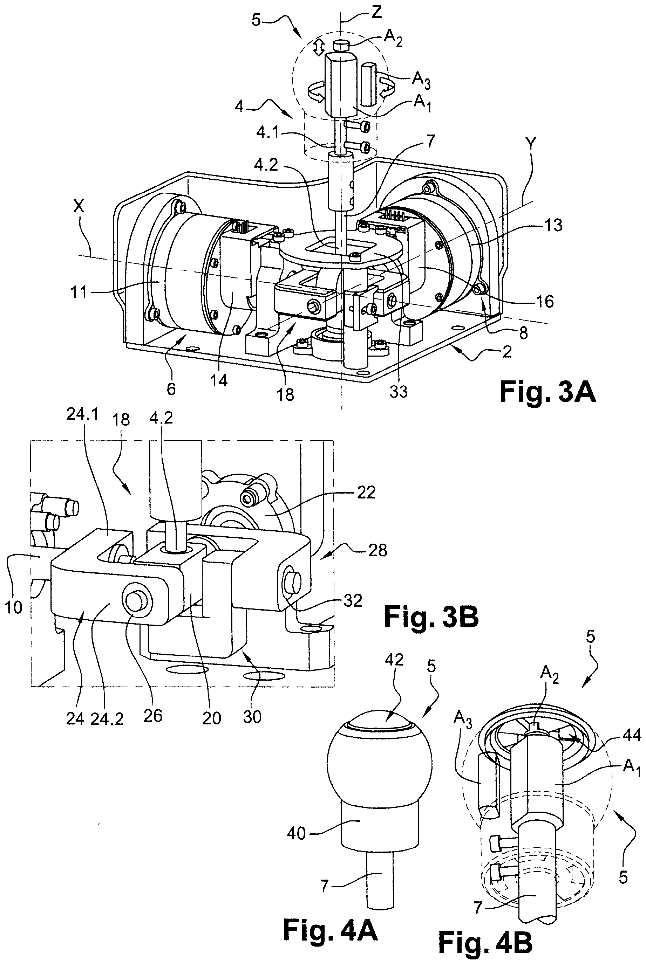

Sur les figures 3A et 3B, on peut voir un exemple d'interface haptique à deux degrés de liberté pouvant être mis en œuvre dans le poste de commande selon l'invention. Il sera compris que cet exemple n'est en aucun cas limitatif comme cela sera décrit dans la suite de la description.

L'interface haptique comporte un bâti 2, un élément d'interaction 4 avec un utilisateur articulé sur le bâti 2 et deux freins magnétorhéologiques 6, 8, désignés freins dans la suite de la description. Les freins magnétorhéologiques sont aptes à générer des stimulations kinesthésiques.

L'élément d'interaction 4 a la forme d'une manette et sera désigné manette ou effecteur dans la suite de la description.

La manette 4 s'étend en position repos le long d'un axe longitudinal Z perpendiculaire sensiblement au plan du bâti 2 et comporte une première extrémité longitudinale 4.1 destinée à être saisie par la main de l'opérateur et équipée par exemple d'un pommeau 5 et une deuxième extrémité longitudinale 4.2 connectée mécaniquement aux freins. Le pommeau est monté sur une tige 7 comportant la deuxième extrémité longitudinale 4.2.

Dans l'exemple représenté, le frein 6 est orienté le long d'un axe X et le frein 8 est orienté le long d'un axe Y perpendiculaire à l'axe X et tous deux perpendiculaires à l'axe Z. Les axes X et Y définissent un plan parallèle au plan du bâti. Le frein 6 comporte un arbre 10 (figure 3B) s'étendant le long de l'axe X et le frein 8 comporte un arbre (non visible) s'étendant le long de l'axe Y.

Dans l'exemple représenté, les deux freins 6 et 8 ont des structures similaires, seul le frein 6 sera décrit en détail. Il sera compris qu'une interface haptique comportant des freins de structures différentes ne sort pas du cadre de la présente invention.

Un exemple de frein est par exemple dans le document WO2016050717 (il s'agit de la demande BD15296). Le frein 6 comporte un arbre 10 mobile en rotation autour de l'axe X et monté dans un boîtier. L'arbre 10 comporte une extrémité connectée mécaniquement à la deuxième extrémité 4.2 de la manette 4 et une deuxième extrémité (non visible) interagissant avec un fluide magnétorhéologique. La deuxième extrémité de l'arbre est par exemple solidaire en rotation d'une jupe disposée dans une chambre remplie de fluide magnétorhéologique. Le frein comporte également des moyens pour générer un champ magnétique dans la chambre de sorte à provoquer une modification de la viscosité du fluide magnétorhéologique. Lorsque la viscosité augmente, un couple résistant s'applique sur la jupe et sur l'arbre 10, et de fait sur la manette via la connexion mécanique entre l'arbre 10 et la manette 4.

L'interface comporte au moins un capteur de position de la manette.

Dans l'exemple représenté, des capteurs de positions angulaires 14 et 16 mesurent la position angulaire des arbres des freins 6, 8. Il peut s'agir par exemple de codeurs optiques incrémentaux.

La connexion mécanique 18 entre la manette 4 et les arbres est un système à cardans bien connu de l'homme du métier dont un exemple non limitatif est représenté sur la figure 1.

Dans l'exemple représenté, la deuxième extrémité 4.2 de la manette 4 est montée dans une pièce 20 au moyen d'un pivot glissant 22. L'arbre 10 est relié à la pièce 20 par une pièce 24 en forme de L, une branche 24.1 du L étant solidaire en rotation sur l'arbre 10 et l'autre branche 24.2 du L étant articulée sur la pièce 20 par un pivot glissant 26.

L'arbre du frein 8 est connecté à la pièce 20 via deux pièces en L 28, 30. Les deux pièces en L 28, 30 sont articulées entre elles par une liaison pivot glissant 32, la pièce en L 28 est solidaire en rotation sur l'arbre du frein 8 et la pièce en L 30 est solidaire en rotation sur la pièce 20.

L'interface comporte des butées pour limiter le déplacement dans le plan X et Y de la manette, dans l'exemple représenté les butées sont formées par un cadre 33 disposé autour de la manette au-dessus de l'articulation à cardans.

De manière avantageuse, l'interface comporte des moyens de rappel en position repos, i.e. la manette est coaxiale avec l'axe Z. Ces moyens sont par exemple de type magnétique disposés entre le bâti 2 et l'articulation à cardans. Il s'agit par exemple de deux aimants permanents en vis-à-vis et alignés avec l'axe Z et exerçant une force magnétique de rappel.

La manette peut alors être déplacée autour des deux axes X et Y et les freins 6, 8 sont aptes à appliquer des couples résistants autour de ses axes en fonction de la position de la manette.

D'une part, toute autre articulation entre la manette et les freins permettant de réaliser une interface à au moins deux degrés de liberté entre dans le cadre de la présente invention, telle celle décrite par exemple dans le document Bin Liu. Development of 2d haptic devices working with magnetorheological fluids. Master's thesis, University of Wollongong, Australia, 2006 ou dans le document A. Milecki, P. Bachman, and M. Chciuk. Control of a small robot by haptic joystick with magnetorheological fluid. Mechatron. Syst. Mater.-MSM, 7, 2011*.*

D'autre part, la structure de freins pourrait être différente. Au lieu d'une jupe, par exemple un disque pourrait interagir avec le fluide magnétorhéologique. Par ailleurs, le frein pourrait être de type électrorhéologique ou électromagnétique.

De plus, les axes des freins pourraient ne pas être perpendiculaires. En outre, l'interface pourrait comporter plus de deux freins.

En variante et comme cela a déjà été mentionné, on pourrait envisager un frein actif comportant un moteur électrique agissant sur l'effecteur.

Une interface haptique dans laquelle l'effecteur aurait une autre forme qu'une manette ne sort pas du cadre de la présente invention.

En outre dans l'exemple représenté, l'interface haptique comporte un ou plusieurs actionneurs vibrants aptes à générer des vibrations et à provoquer une stimulation vibrotactile de l'utilisateur.

Sur les figures 4A et 4B on peut voir une vue de détail du pommeau de l'interface haptique représenté sur la figure 1A. Dans cet exemple, l'interface comporte trois actionneurs vibrants A1, A2, A3 qui sont montés sur la manette, par exemple dans le pommeau. Dans un exemple de réalisation avantageux, chaque actionneur est tel qu'il est apte à générer des vibrations dans une gamme de fréquence et/ou une gamme d'amplitude au moins en partie différentes de celles des deux autres actionneurs. Ainsi les actionneurs couvrent ensemble un large spectre de fréquence et/ou d'amplitude ce qui offre de grandes possibilités en termes de sensation vibrotactile.

Ces actionneurs sont distincts des freins, notamment dans le cas d'un frein actif.

La disposition relative des actionneurs vibrants est donnée uniquement à titre d'exemple et n'est en aucun cas limitative.

De manière très avantageuse, les actionneurs sont fixés sur l'effecteur de sorte à les isoler mécaniquement les uns des autres, ce qui permet d'isoler la stimulation qu'ils génèrent et, par exemple, exciter des zones de la main de manière séparée.

Selon un exemple de réalisation, les moyens pour générer une stimulation kinesthésique sont aptes à générer une stimulation vibrotactile, par exemple en utilisant un ou des moteurs électriques. Néanmoins cet exemple a pour inconvénient une consommation électrique plus élevée car l'ensemble de l'articulation mécanique de l'interface doit être mis en vibration. En outre les vibrations ne sont pas générées au plus près de la main de l'utilisateur.

Les actionneurs peuvent être disposés de manière quelconque par rapport à la surface de la manette. De manière préférée, on peut les disposer de sorte que les vibrations générées soient dans un plan normal ou dans un plan tangentiel à la surface de la peau.

Le poste de commande selon l'invention, et en particulier le dispositif de commande haptique 114, permettent d'une part, par déplacement de l'effecteur, de commander une ou plusieurs fonctions de la nacelle élévatrice, par exemple de manière non limitative son déplacement par rapport au sol, et/ou le déploiement de la structure extensible 106 et/ou la rotation de la structure extensible 106 par rapport au châssis 102. D'autre part il permet d'envoyer des informations ou messages à l'utilisateur par l'intermédiaire de stimulations kinesthésiques et/ou de stimulations vibrotactiles commandées par le contrôleur 117 afin, par exemple, d'alerter l'utilisateur d'une situation potentiellement dangereuse, de signifier qu'une manœuvre est arrêtée, de donner des informations sur l'état de la nacelle élévatrice et / ou de l'environnement.

En utilisant les stimulations kinesthésiques ou les stimulations vibrotactiles ou, avantageusement, les deux types de stimulations successivement ou simultanément, les messages envoyés sont repérés par l'utilisateur contrairement aux stimulations sonores et visuelles qui sont peu efficaces. En outre ils sont compréhensibles au moins au plus grand nombre.

Des exemples de messages pouvant être envoyés par l'interface haptique à l'utilisateur dans différentes situations, vont maintenant être décrits. Il sera compris que ceux-ci ne sont pas limitatifs et que, pour les mêmes situations, d'autres stimulations haptiques ou combinaisons de stimulations haptiques peuvent être générées, par exemple en fonction des utilisateurs destinés à utiliser la nacelle élévatrice, par exemple en fonction des régions du monde. En outre l'interface haptique étant programmable et capable de reproduire tout type de motif haptique, tout autre message sous forme d'une ou plusieurs stimulations haptiques relatif à une autre situation peut être produit.

Les exemples de messages qui vont être décrits sont pour la plupart des combinaisons de stimulations kinesthésiques et vibrotactiles qui permet un haut niveau de compréhension par l'utilisateur. Masi il sera compris que des messages ne comportant qu'une ou plusieurs stimulations kinesthésiques et/ou une ou plusieurs stimulations vibrotactiles ne sortent pas du cadre de la présente invention. En outre, dans les exemples décrits ci-dessous, on considère l'interface représentée sur la figure 2A, la stimulation kinesthésique est obtenue par des freins magnétorhéologiques générant un effort résistant sur l'effecteur. Il sera compris que les stimulations kinesthésiques peuvent être générées par des freins électrorhéologiques, des moteurs électriques...

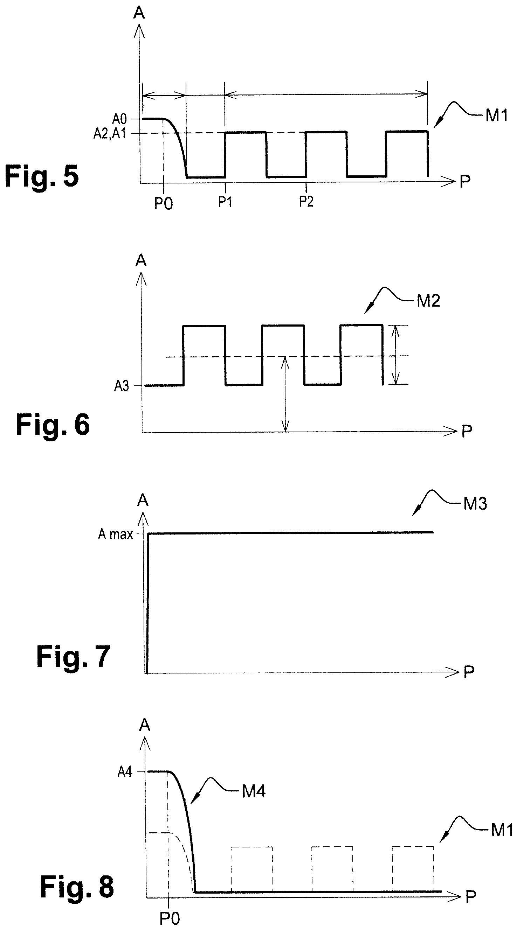

Dans le cas d'un fonctionnement conforme de la nacelle élévatrice, on peut choisir de n'envoyer aucun message vibrotactile, i.e. le ou les actionneurs vibrants ne sont pas actionnés. On peut envoyer un message kinesthésique, par exemple selon le motif haptique M1 représenté sur la figure 5 représentant l'amplitude A de l'effort résistant en fonction de la position P de l'effecteur.

On considère le cas où l'effecteur est déplacé le long de l'axe X ou le long de l'axe Y.

Le motif haptique M1 est tel qu'il génère un effort résistant d'une première amplitude A0 tant que l'effecteur reste dans une zone centrale et ne dépasse pas la position P0. Cet effort simule un plateau et représente la zone neutre de l'effecteur, i.e. tant que l'effecteur ne sort pas de cette zone, aucune commande n'est envoyée à la nacelle élévatrice.

Lorsque l'effecteur est déplacé au-delà de la zone centrale et dépasse la position P0, on prévoit de simuler un crantage. Des crans sont simulés lorsqu'il atteint les positions P1, P2...en générant un effort résistant d'amplitude A1, A2...respectivement.

On peut avantageusement prévoir que lorsque l'utilisateur ramène l'effecteur en position centrale, le motif haptique de crantage soit supprimé et l'utilisateur ne ressente que la raideur de rappel de l'effecteur.

Par exemple, dans le cas où le déplacement de l'effecteur sert à réguler la vitesse de déplacement de la nacelle élévatrice par rapport au sol, les motifs différents entre le déplacement en éloignement de la zone centrale et le déplacement en rapprochement de la zone centrale permettent à l'utilisateur de savoir par ressenti haptique, si son geste produit un mouvement d'accélération ou un mouvement de décélération.

Dans le cas où le déplacement de l'effecteur provoque la rotation de la tourelle 103 par rapport au châssis 102, le déplacement de l'effecteur à partir de la zone centrale dans un premier sens donné le long de la direction X ou Y, provoque la rotation de la tourelle 103 dans un sens de rotation donné et plus l'effecteur est éloigné de la zone centrale plus la rotation est rapide. Pour provoquer la rotation de la tourelle 103 dans le sens de rotation opposé, l'effecteur ramène l'effecteur dans la zone centrale et déplace ensuite l'effecteur dans la même direction dans un deuxième sens opposé au premier sens en éloignement de la zone centrale. Ce type de procédure peut s'appliquer au déplacement vers l'avant ou vers l'arrière du châssis par rapport au sol et aux différents mouvements de la structure extensible 106, tels que le levage, la descente, l'extension ou la rétractation du bras télescopique 107.3, etc.

Des motifs haptiques différents peuvent être générés suivant que la tourelle 103 se déplace dans un sens de rotation ou dans l'autre et/ou que le châssis de déplace vers l'avant ou vers l'arrière et suivant le type de déplacement de la structure extensible 106.

Dans l'exemple du motif haptique M1, la simulation de crans est obtenue en appliquant une variation d'amplitude de forme rectangulaire, mais d'autres formes peuvent être appliquées telles qu'une forme trapézoïdale, sinusoïdale, etc. Dans l'exemple les amplitudes A1, A2... sont de même valeur mais on pourrait prévoir par exemple que leur valeur soit croissante à mesure que l'effecteur s'éloigne de la position P0, ou inversement qu'elle soit décroissante. En outre la fréquence spatiale des zones de crans peut être différente, la survenance des crans pouvant spatialement se rapprocher ou s'éloigner ou sur, une certaine zone se rapprocher et, sur une certaine zone s'éloigner.

En outre toute autre texture haptique significative pour l'utilisateur peut être envisagée.

Enfin dans le cas particulier d'une interface à deux degrés de liberté, on peut envisager que les motifs sur les axes X et Y soient identiques ou différents.

Grâce à l'invention, un grand nombre de messages différents peut être généré pour être compréhensible par l'utilisateur et proche de la situation en cours.

Les nacelles élévatrices sont caractérisées notamment par l'existence d'une enveloppe de sécurité qui correspond à une limite spatiale autour des nacelles élévatrices, au-delà de laquelle le risque de renversement augmente. Par exemple, le déploiement complet de la structure extensible avec une orientation particulière par rapport au châssis et /ou une valeur de dévers, etc. peut provoquer un renversement. On souhaite donc informer l'utilisateur lorsque la nacelle élévatrice se rapproche de cette enveloppe de sécurité.

Grâce à la présente invention, un message d'alerte peut être transmis à l'opérateur via l'effecteur et alerter efficacement l'utilisateur.

Le contrôleur 117 comporte par exemple en mémoire un ou des abaques permettant de déterminer l'enveloppe de sécurité de la nacelle élévatrice en fonction de différents paramètres, tels que le dévers du châssis de la nacelle élévatrice, l'état de la structure extensible (niveau de déploiement, charge embarquée dans la plateforme...) Les valeurs de ces paramètres peuvent être données par des capteurs dont est équipé la nacelle élévatrice, par exemple un ou des capteurs d'angle du châssis.

Le calculateur calcule donc l'enveloppe de sécurité de la nacelle élévatrice dans le contexte dans lequel se trouve la nacelle élévatrice.

Un seuil programmable en amont de l'enveloppe de sécurité est enregistré et un ou des messages haptiques est ou sont transmis à l'utilisateur lorsque le seuil programmable a été dépassé.

En fonction des commandes données par l'utilisateur en manipulant l'effecteur de l'interface haptique, le contrôleur va commander le ou les freins magnétorhéologiques et/ou les actionneurs vibrants pour alerter l'utilisateur qu'il a dépassé le seuil programmable et se rapproche de l'enveloppe de sécurité. L'utilisateur est alors informé des risques de renversement possibles. En outre ce message d'alerte évite ou pour le moins réduit le risque d'incompréhension de la part de l'utilisateur lorsque l'actionnement de la nacelle élévatrice se bloque, par exemple lorsque les vérins sont bloqués de manière sécuritaire ou lorsque l'enveloppe de sécurité est atteinte.

Sur la figure 6, on peut voir un exemple de motif haptique M2 permettant de générer une stimulation kinesthésique telle que, alors que l'utilisateur peut encore déplacer l'effecteur, il doit exercer un effort supplémentaire inhabituel pour le déplacer. Cela se traduit au niveau du motif haptique de la figure 6 par des crans tels que ceux de la figure 5, puisqu'il s'agit d'un fonctionnement conforme mais une composante continue d'effort d'amplitude A3 se superpose à l'amplitude requise pour franchir les crans. L'utilisateur doit fournir un effort inhabituellement élevé pour déplacer l'effecteur, il est alors prévenu qu'il se rapproche de l'enveloppe de sécurité et que le mouvement en cours peut conduire à une situation risquée. Cette stimulation envoie donc un message facilement interprétable par l'utilisateur.

Lorsque la nacelle élévatrice atteint l'enveloppe de sécurité, il peut être avantageusement prévu que les freins simulent une butée bloquante, en appliquant un effort d'amplitude AMax maximale qui empêche tout déplacement supplémentaire de l'effecteur dans le sens visant à maintenir le danger. Le motif haptique M3 d'une telle butée est représenté sur la figure 7. La génération de cette butée peut avoir lieu à chaque tentative de l'utilisateur de déplacer l'effecteur dans une position commandant une action dangereuse, afin qu'il comprenne que l'interface n'est plus actionnable. Comme nous le verrons par la suite, il est préférable que la stimulation vibrotactile ne soit pas générée à chaque tentative de l'utilisateur.

La génération d'une butée peut également être avantageusement simulée par les freins sur ordre du contrôleur lorsque l'un au moins des actionneurs de la nacelle élévatrice, par exemple un vérin de déplacement d'un des bras 107.1, 107.2, 107.3 et 107.4, atteint sa fin de course. Un ou des capteurs de fin de course 119 sont mis en œuvre eu niveau des vérins de déplacement d'un des bras.

Avantageusement, si l'utilisateur déplace l'effecteur de sorte à éloigner la nacelle élévatrice de l'enveloppe de sécurité les freins peuvent simuler des crans d'amplitude normale sans composante d'effort supplémentaire, ce qui sera interprété par l'utilisateur que son action rapproche la nacelle élévatrice vers une situation sécuritaire.

L'utilisateur est alors guidé dans ces gestes et ressent haptiquement quels sont les mouvements qu'il doit effectuer pour remettre la nacelle élévatrice dans une position sûre.

De manière très avantageuse, on prévoit également de transmettre un message vibrotactile à l'utilisateur pour insister sur le risque à venir.

Par exemple, on emploie une métaphore dite du radar de recul. Elle consiste à générer des vibrations, lorsque le seuil programmable est dépassé, celles-ci ayant une amplitude croissante et une fréquence d'apparition de plus en plus élevée lorsque la nacelle élévatrice se rapproche de l'enveloppe de sécurité. Lorsque l'enveloppe est atteinte, on prévoit avantageusement la génération de vibrations en continue analogue au bip continu émis par le radar de recul lorsque le véhicule est trop près d'un obstacle. Cette vibration alerte l'utilisateur et l'incite à stopper son action. Ce message vibrotactile n'est par exemple joué qu'une seule fois afin de ne pas surcharger l'attention de l'utilisateur.

La nacelle élévatrice peut être équipée d'un ou plusieurs capteurs lui permettant de détecter que le châssis et/ou la plateforme et/ou la structure extensible se rapproche d'un obstacle. L'interface haptique peut alors informer l'utilisateur de l'imminence d'un contact avec un obstacle que l'utilisateur aurait pu ne pas voir. Les messages kinesthésiques et vibrotactiles peuvent être identiques ou similaires à ceux transmis dans le cas du rapprochement de l'enveloppe de sécurité ou différents, par exemple en intensité et en fréquence.

Par exemple, ces messages peuvent être transmis lorsque le châssis est déplacé par rapport au sol et que des moyens, tels que des capteurs de position ou d'obstacle et/un système de géolocalisation associé à un protocole de communication entre machines, détectent un obstacle ou un trou.

Pour certaines nacelles élévatrices, par exemple celles pouvant permettre d'atteindre de très grandes hauteurs, des zones de déploiement sont déterminées. Par exemple une zone restreinte pour le déplacement d'une charge élevée et une zone étendue pour le déplacement d'une charge faible. Ces zones sont définies dans des abaques.

Il peut être très avantageux de transmettre un message à l'utilisateur que la nacelle élévatrice est passée d'une zone à l'autre ou qu'il va passer d'une zone à l'autre. Un message d'alerte similaire à celui généré dans le cas de l'approche de l'enveloppe de sécurité peut être généré. Un seuil programmable peut également être fixé. Il est à noter que la charge embarquée dans la plateforme peut être mesurée par un ou des capteurs. Le contrôleur peut alors déterminer s'il est pertinent ou non d'informer l'utilisateur du rapprochement ou du franchissement de la limite entre les deux zones. Par exemple le contrôleur peut ne pas communiquer cette information si la charge mesurée dans la plateforme est très nettement inférieure à la capacité de charge maximale.

La délimitation de ces zones peut se faire sur la base d'autres paramètres, par exemple sur la base de la pente du sol sur lequel la nacelle élévatrice est disposée. Par exemple, il peut être défini une zone restreinte lorsque le châssis est fortement incliné, i.e. la nacelle élévatrice est sur un sol en pente, et une zone étendue quand le châssis est sensiblement horizontal, i.e. la nacelle élévatrice sur un sol plat.

En outre, le nombre de zones n'est pas limité à deux. Par exemple on peut définir une zone fortement restreinte, une zone restreinte et une zone élargie.

Comme cela a été expliqué ci-dessus, les nacelles élévatrices peuvent être utilisées par des utilisateurs novices ou occasionnels, qui peuvent oublier certaines procédures d'actionnement des nacelles élévatrices. Par exemple, il est fréquent que les nacelles élévatrices comportent une procédure de démarrage et de manipulation mettant en œuvre une pédale homme-mort qu'il faut enclencher préalablement au démarrage et à la manipulation de la nacelle élévatrice.

Or l'oubli de cette étape provoque en général l'incompréhension de l'utilisateur qui conclut de l'absence de réaction de la nacelle élévatrice que celle-ci est en panne alors qu'elle est en état de fonctionner.

Grâce au poste de commande selon l'invention, un message peut être envoyé à l'utilisateur l'informant que la procédure est incorrecte et l'invitant à vérifier les différentes étapes.

D'un point de vue vibrotactile, il peut être prévu de simuler un message reproduisant une sirène, par exemple en alternant les vibrations à deux niveaux d'amplitude et à deux niveaux de fréquence.

D'un point de vue kinesthésique, le motif haptique M4 reproduit peut être celui de la figure 8. En pointillés est représenté le motif M1 de fonctionnement conforme à titre de comparaison. Il comporte, comme pour le fonctionnement conforme, la génération d'un effort résistant d'amplitude A4 lorsque l'effecteur est dans une zone centrale et, l'absence d'effort résistant lorsque l'effecteur sort de la zone centrale, l'utilisateur peut alors déplacer librement l'effecteur et ne ressent aucun cran, contrairement à la stimulation générée en cas de fonctionnement conforme.

Ce ressenti inhabituel prévient alors l'utilisateur de la situation anormale dans laquelle il se trouve.

Cette stimulation est de préférence appliquée quelle que soit la position de l'effecteur par rapport aux axes X et Y afin que le message de procédure anormale soit compris par l'utilisateur.

Il sera compris que le déplacement de l'effecteur dans ces conditions, ne provoque aucune action au niveau de la nacelle élévatrice.

Une procédure incorrecte peut comprendre toute étape provoquant le non-fonctionnement de la nacelle élévatrice, telle que :
- l'oubli de la pédale homme-mort ou l'oubli de la réactivation de la pédale homme-mort,
- l'oubli de l'allumage du moteur pour les nacelles élévatrices à moteur à combustion,
- l'oubli du harnais dans le cas des machines où cet oubli provoque le non fonctionnement,
- la détection d'une surcharge,
- le positionnement du sélecteur de poste situé sur le poste de commande auxiliaire de commande tel que le poste de commande actif n'est pas celui que l'utilisateur manipule.

On peut envisager que le même message haptique soit transmis pour toutes les procédures incorrectes ou alors, qu'un message haptique spécifique soit dédié à chaque procédure incorrecte.

Les personnes novices utilisant le poste de contrôle d'une nacelle élévatrice peuvent être maladroites. Dans le cadre d'une formation, il peut être intéressant de les alerter sur la vitesse avec laquelle elles actionnent l'interface, notamment lors de situations à risque.

Grâce à l'invention, on peut prévoir de transmettre un message haptique destiné à alerter l'utilisateur sans empêcher son mouvement. Le message a pour but d'attirer l'attention de l'utilisateur. Ce message est avantageusement généré par stimulation vibrotactile en produisant une seule fois tout d'abord des vibrations de forte amplitude, et ensuite des vibrations de plus faible amplitude sur une durée par exemple de 1,5 s. Ce message reproduit la métaphore vocale «eh oh » utilisée pour attirer l'attention d'une personne sur une situation anormale, les vibrations de forte amplitude reproduisant le « eh » et les vibrations de plus faible amplitude reproduisant le « oh ».

Dans ce type de situation, la stimulation vibrotactile est suffisamment efficace à elle seule. Mais il pourrait être prévu de générer une stimulation kinesthésique afin de renforcer davantage le signal d'alerte.

Comme cela a déjà été mentionné, l'interface haptique mise en œuvre permet de guider les gestes de l'utilisateur.

L'effecteur de la figure 2A peut être déplacé dans tous les directions du plan XY. Mais on peut souhaiter que l'utilisateur puissent distinguer haptiquement lorsqu'il déplace l'effecteur sur les axes X et Y ou lorsqu'il le déplace selon une direction transversale. Par exemple le déplacement le long d'un des axes comme l'entrée et la sortie du bras télescopique et le déplacement le long de l'autre direction commande le levage ou la descente d'un bras. Les freins peuvent alors être commandés pour qu'un effort résistant différent soit ressenti par l'utilisateur lorsqu'il déplace l'effecteur uniquement le long de la direction X, ou uniquement le long de la direction Y, et lorsqu'il déplace l'effecteur dans une direction transversale. Par exemple les freins peuvent générer un effort résistant supplémentaire lorsque l'effecteur est déplacé transversalement. Ainsi l'utilisateur distingue clairement lorsqu'il contrôle les deux mouvements indépendamment ou en combinaison. L'utilisation de la nacelle élévatrice est plus facile et plus sûre puisque l'utilisateur ressent haptiquement les actions qu'il commande.

De plus il est possible, grâce à l'interface haptique, de transmettre des messages d'information générale à l'utilisateur à caractère purement informatif, sur une situation ou un état qui ne met pas en danger l'utilisateur ou ne provoque pas le non-fonctionnement des commandes de la nacelle élévatrice. Par exemple, on peut informer l'utilisateur sur le niveau de la batterie ou le niveau de carburant de la nacelle élévatrice.

Par exemple, on génère un message par stimulation vibrotactile de sorte qu'il ne soit pas intrusif. En outre il est avantageusement relativement court pour pouvoir être ignoré si besoin. Plusieurs actionneurs vibrants peuvent être activés avec des amplitudes et fréquence différentes. De plus, les vibrations générées peuvent s'arrêter à des instants différents. Cette discontinuité temporelle entre les deux actionneurs qui ne s'arrêtent pas au même moment permet d'accentuer une extinction progressive des actionneurs simulant un effet de batterie qui se vide ou une goutte d'eau qui tombe dans un liquide. L'interface haptique peut par exemple mettre en œuvre un premier actionneur apte à générer des vibrations de moyenne fréquence et un deuxième actionneur apte à générer des vibrations de faible fréquence. Par exemple, le premier actionneur émet des vibrations de moyenne fréquence dont l'amplitude diminue d'une valeur haute vers une valeur faible et le deuxième actionneur émet des vibrations de faible fréquence dont l'amplitude décroit mais reste à des valeurs élevées.

Le message présente l'avantage d'avoir un ressenti relativement doux et se différentie des autres messages par exemple d'alerte.

La mise en œuvre de messages vibrotactiles est particulièrement intéressante pour transmettre des messages informatifs car leur ressenti ne requiert pas d'action sur l'effecteur contrairement aux messages kinesthésiques qui nécessitent un déplacement de l'effecteur pour être ressentis. Il est à noter cependant que ces messages vibrotactiles informatifs peuvent être transmis alors que l'utilisateur déplace l'effecteur et ressent par ailleurs une stimulation kinesthésique transmettant un autre type de message.

En outre, la mise en œuvre d'un poste de contrôle muni d'au moins une interface haptique permet d'améliorer l'utilisation du poste.

Il peut être prévu que le contrôleur rende le déplacement de l'effecteur plus difficile, par exemple dans le cas de déplacement sur un terrain accidenté, afin de limiter la transmission à l'effecteur de secousses provoquées par les irrégularités du sol et éviter des variations brusques de la commande de mouvement. L'information de l'état du terrain peut être fournie soit par des capteurs, par exemple par des capteurs d'angle sur le châssis, soit par l'utilisateur qui va par exemple actionner un bouton indiquant que le terrain est accidenté, soit par le ou les capteurs de position de l'effecteur permettant de déterminer que le déplacement de l'effecteur est trop rapide.

L'actionnement de l'effecteur est alors rendu plus sûr et plus précis.

Grâce à l'invention, on peut également prévoir de modifier les efforts résistants appliqués à l'effecteur en cas de risque d'écrasement de l'opérateur. Par exemple, il peut arriver que l'utilisateur soit projeté contre le poste de commande par un obstacle extérieur à la plateforme et vienne appuyer contre l'effecteur de l'interface. Afin de réduire le risque de blessure, le contrôleur, par exemple sur la base d'informations fournies par le déplacement d'une barre de sécurité tel que décrit dans le brevet FR3007401, commande les freins de sorte qu'ils n'appliquent aucun effort résistant à l'effecteur. Celui-ci peut alors être déplacé très facilement, notamment être rabattu contre la console en offrant peu de résistance. Ainsi les risques de perforation du corps de l'utilisateur par l'effecteur peuvent être réduits.

Le châssis d'une nacelle élévatrice peut se déplacer d'avant en arrière et inversement le long d'une direction longitudinale W. Généralement, la commande du mouvement de déplacement en avant et en arrière du châssis est réalisée en déplaçant un effecteur suivant un axe unique, en avant et en arrière. Sur une nacelle élévatrice équipée d'une tourelle 103, la position angulaire de la plateforme 111 et du pupitre de commande 112 par rapport au châssis 102 est variable de 0° à 360°. Il en résulte que la direction de déplacement de l'effecteur est parallèle à la direction W de déplacement de la nacelle élévatrice et le déplacement vers l'arrière de l'effecteur correspond effectivement à un déplacement de la nacelle élévatrice vers l'arrière et le déplacement vers l'avant de l'effecteur correspond effectivement à un déplacement de la nacelle élévatrice vers l'avant, lorsque l'angle entre le châssis et la tourelle est égale à 0°. Le même problème peut se poser dans le cas d'une pelleteuse ou d'une grue mobile.

Par conséquent, la direction de déplacement avant / arrière de l'effecteur qui commande le déplacement du châssis a une orientation et éventuellement un sens différents de la direction avant / arrière du châssis dès lors que la tourelle a pivoté par rapport au châssis. Ceci est une source de confusion pour l'opérateur qui peut commander par erreur un mouvement dans une direction et un sens différents de ceux qu'il souhaitait. Or, une erreur dans la direction ou le sens de déplacement de la nacelle élévatrice peut provoquer des situations dangereuses, la nacelle élévatrice peut rentrer dans un mur alors que l'utilisateur souhaitait s'en éloigner.

Grâce à l'interface haptique entièrement programmable mise en œuvre dans le poste de commande selon l'invention, le contrôleur peut reprogrammer la relation entre la direction et le sens de déplacement de l'effecteur et la direction et le sens de déplacement du châssis par exemple sur la base d'informations fournies sur la position angulaire entre la plateforme et le châssis. Pour cela, le contrôleur peut commander les freins 6 et 7 pour ne permettre le déplacement de l'actionneur que suivant une seule direction qui est parallèle à la direction W du châssis et bloquer le déplacement de l'actionneur suivant toutes les autres directions. Ainsi l'utilisateur n'a plus à tenir compte du déplacement de la plateforme par rapport au châssis et n'a pas à modifier son comportement lors de l'actionnement de l'effecteur pour déplacer le châssis sur le sol. La sécurité d'utilisation de la nacelle élévatrice est alors sensiblement améliorée.

De manière plus générale, on prévoit des moyens pour mesurer l'orientation du poste de commande, en particulier celle du ou des effecteurs, par rapport à celle du dispositif commandé. Cette information permet alors au contrôleur d'adapter le ou les degrés de liberté de l'effecteur afin d'assurer une commande sûre. Par exemple, les moyens mesurent l'orientation relative entre le poste de commande porté par l'opérateur à pied et le dispositif commandé.

Dans un exemple de réalisation, les moyens de mesure de l'orientation comportent une boussole portée par le poste de commande et une boussole portée par le dispositif commandé. Les boussoles peuvent être mécaniques ou électroniques, par exemple il peut s'agir de magnétomètres.

Dans un autre exemple de réalisation, les moyens de mesure de l'orientation sont de type à radioguidage, le dispositif comportant par exemple un émetteur d'ondes de forme donnée et le poste de commande comportant un récepteur capable d'analyser l'onde reçue et de déterminer l'orientation relative du poste de commande et du dispositif commandé.

Dans un autre exemple, les moyens de mesure de l'orientation sont par exemples des moyens optiques, par exemple à reconnaissance de forme.

Dans un autre exemple de réalisation, le poste de commande permet de commander un drone aérien. Sur la base de l'information d'orientation du drone par rapport au poste de commande obtenu par exemple grâce à des capteurs de type boussole électronique, le poste de commande peut privilégier ou interdire des directions de déplacement du drone en programmant différents efforts haptiques qui sont ressentis lors du déplacement de l'effecteur du poste de commande. Par exemple les drones offrant des capacités de vol stationnaire (drone de type quadri-rotor, hélicoptère) induisent la possibilité de changer l'orientation de l'engin au cours du vol, alors que le poste de commande situé au sol peut rester fixe. En outre le drone peut être équipé d'un dispositif de détection d'obstacles (dispositif télémétrique à ultrason, à laser, radar), l'interface haptique du poste de commande peut alerter l'utilisateur d'un danger ou d'une collision possible, ou interdire un déplacement qui mettrait le drone en situation de danger, par exemple un déplacement qui engendrerait un rapprochement du drone vers un mur, un arbre, un pylône etc. Enfin le poste de commande peut également restituer, de manière haptique, des informations sur l'environnement du drone, par exemple la direction et/ou la force du vent. Ces informations peuvent être traduites par une stimulation vibrotactile d'intensité et/ou de fréquence variable, par des crans haptiques ressentis lorsque l'on déplace l'effecteur dans une direction provoquant le déplacement du drone face au vent, ou par tout autre message haptique.

De manière avantageuse, le contrôleur peut envoyer des ordres aux moyens de stimulation haptique de générer des stimulations haptiques différentes suivant le sens de déplacement de l'effecteur, afin d'informer l'utilisateur sur le sens de déplacement de la nacelle qui est commandé. Par exemple, des crans différents peuvent être simulés suivant le sens de déplacement, ou des crans peuvent être simulés dans un sens de déplacement et aucune stimulation peut n'être prévue dans l'autre sens de déplacement.

L'interface haptique peut être programmée pour permettre une étape de sélection d'une action et ensuite une commande de cette action. Par exemple, un effort résistant est appliqué à l'effecteur pour qu'il soit déplaçable uniquement le long d'un axe dans un sens ou dans l'autre, pour sélectionner une action. L'action sélectionnée dépend du sens de déplacement de l'effecteur. Un message haptique, par exemple, un message vibrotactile, est envoyé pour signifier à l'utilisateur que la sélection a été faite. Ensuite, les freins sont activés de sorte que l'effecteur soit déplaçable le long de l'autre direction uniquement pour commander l'action sélectionnée.

Par exemple, on peut considérer une nacelle élévatrice de type ciseaux. La séquence de commande est :
1) lors d'une première étape, l'effecteur est en mode « sélecteur », il ne peut être déplacé que le long de l'axe X vers la gauche ou vers la droite. Un déplacement vers la gauche sélectionne l'action de translation du châssis, et un déplacement vers la droite sélectionne l'action de levage. Lorsque la sélection est faite des vibrations sur une courte durée sont émises, confirmant la sélection,
2) lors d'une deuxième étape, l'effecteur n'est déplaçable que le long de la direction Y, en poussant l'effecteur il effectue une commande proportionnelle. Par exemple, en poussant l'effecteur en avant ou en arrière, l'utilisateur commande le mouvement sélectionné de manière proportionnelle.

Le poste de commande selon l'invention fournit des messages détectables et reconnaissables par l'utilisateur, puisqu'ils sollicitent le sens du toucher qui n'est pas sollicité, contrairement à la vue et à l'ouïe. En outre, les stimulations kinesthésiques et les stimulations vibrotactiles utilisées séparément, ou en combinaison, permettent de créer des messages haptiques facilement compréhensibles par l'utilisateur.

De plus, en couplant avantageusement des actionneurs vibrants et des freins, on combine les avantages des deux types de retours haptiques kinesthésiques et vibrotactiles, ce qui permet de couvrir l'ensemble des situations de façon complémentaire par des retours différents. Les freins permettent un retour riche et stable lors de l'actionnement de l'interface et les actionneurs vibrants permettent un retour vibrotactile pilotable à la demande même si l'effecteur n'est pas déplacé.

Il est alors possible de transmettre des messages à l'utilisateur, à la fois lorsqu'il ne déplace pas l'effecteur et lorsqu'il déplace l'effecteur, par exemple pour informer d'une fin de course d'un vérin ou l'atteinte de la limite de l'enveloppe de sécurité de la nacelle élévatrice après que l'effecteur a atteint sa position maximale de déplacement.

La stimulation vibrotactile peut également être particulièrement efficace lorsqu'un retour plus disruptif ou intense comme le cas d'alertes doit être appliqué, ce type de retour est plus difficilement réalisable avec le couplage résistant seul. La stimulation vibrotactile permet par exemple de fournir un retour à la demande, en fonction du temps écoulé et/ou d'événements du contexte d'application, par exemple un moteur non allumé, et/ou en fonction de la position et/ou vitesse de déplacement de l'effectuer.

En outre, l'interface haptique étant programmable, elle offre une grande liberté dans les stimulations haptiques qui peuvent être générées. En outre elle peut être programmée pour offrir d'autres fonctionnalités que la transmission de messages haptiques, telles que la prise en compte de la rotation de la plateforme par rapport au châssis dans la commande des déplacements avant-arrière.

Dans la description ci-dessus, l'interface haptique présente deux degrés de liberté, mais une interface haptique présentant un seul degré de liberté ne sort pas du cadre de la présente invention. Par exemple l'effecteur pourrait se déplacer uniquement le long d'une direction d'avant en arrière et inversement, ou de gauche à droite et inversement. En outre un poste de commande comportant plus d'une interface haptique, voire ne comportant que des interfaces haptiques ne sort pas du cadre de la présente invention.

Enfin, l'invention s'applique à tous les postes de commandes, par exemple à la fois le poste de commande sur la plateforme et le poste de commande auxiliaire, de tous les types de nacelles élévatrices, quel que soit le type de structure extensible, quels que soient les moyens d'actionnement de la structure extensible, et quels que soient les moyens pour déplacer la plateforme. En outre, le contrôleur de l'interface peut être connecté à différents moyens de détection équipant la plateforme tels que des accéléromètres, capteurs d'angle, capteur de position, système de géolocalisation, détecteur de charge. Il peut également communiquer avec d'autres machines. Ainsi ile contrôleur peut recevoir des informations sur l'environnement de la plateforme et son évolution et émettre des messages contextuels.

## Revendications

1. Système comportant un poste de commande et un dispositif, par exemple une nacelle élévatrice, commandé par ledit poste de commande, ledit poste de commande comportant au moins un dispositif de commande (114) destiné à contrôler au moins une action du dispositif commandé, ledit dispositif de commande (114) comprenant un interface haptique comprenant au moins un élément d'interaction avec l'utilisateur (4), et un contrôleur (117) configuré pour envoyer des ordres à l'interface haptique de générer des stimulations haptiques au niveau de l'élément d'interaction avec l'utilisateur sur la base au moins d'informations relatives à un état du dispositif commandé et/ou de son environnement, ladite interface haptique comporte des moyens de génération d'une stimulation kinesthésique, **caractérisé en ce que** le système comporte également des moyens de mesure de l'orientation relative de l'élément d'interaction avec l'utilisateur (4) et d'au moins une partie du dispositif commandé, et **en ce que** le contrôleur (117) est configuré de sorte que, sur la base des informations fournies par les moyens de mesure de l'orientation relative entre le dispositif de commande et le dispositif commandé, il commande les moyens de génération d'une stimulation kinesthésique de sorte que le dispositif de commande ne soit déplaçable que selon une direction parallèle à la direction de déplacement de ladite au moins partie du dispositif commandé.

2. Système selon la revendication 1, dans lequel les moyens de mesure de l'orientation relative entre l'élément d'interaction avec l'utilisateur (4) et la au moins une partie du dispositif commandé mesurent la position relative de l'élément d'interaction avec l'utilisateur (4) et d'une partie au moins du dispositif commandé, et dans lequel le contrôleur relie la direction et le sens de l'élément d'interaction avec l'utilisateur (4) et le sens de déplacement de la au moins une partie du dispositif commandé et/ou dans lequel les moyens de mesure de l'orientation relative entre l'élément d'interaction avec l'utilisateur (4) et la au moins une partie du dispositif commandé comportent au moins un capteur fournissant une information d'orientation de l'élément d'interaction avec l'utilisateur (4), et au moins un capteur fournissant une information d'orientation de ladite au moins une partie commandée.

3. Système de commande selon la revendication 1 ou 2, dans lequel le contrôleur (117) est configuré pour prendre en compte au moins la position de l'élément d'interaction avec l'utilisateur (4).

4. Système selon l'une des revendications 1 à 3, dans lequel les moyens de génération d'une stimulation kinesthésique (6, 8) comportent au moins un frein magnétorhéologique (16, 18).

5. Système selon l'une des revendications 1 à 4, dans lequel l'interface haptique comporte des moyens de génération d'une stimulation vibrotactile, lesdits moyens de génération une stimulation vibrotactile comportant avantageusement au moins un actionneur vibrant (A1, A2, A3), avantageusement positionné sur l'élément d'interaction avec l'utilisateur (4).

6. Système selon l'une des revendications 1 à 5, comportant d'autres dispositifs de commande (115, 116) comportant ou non une interface haptique.

7. Système selon l'une des revendications précédentes, comportant des moyens (119) de détection de l'état de du dispositif commandé et/ou de sa disposition par rapport à l'environnement extérieur et des moyens de transmission des signaux émis par les moyens de détection au contrôleur de sorte qu'il prenne compte des signaux pour commander l'interface haptique, le dispositif commandé comportant avantageusement un châssis (102) et au moins une structure articulée (106), une plateforme (108) portée par la structure articulée (106) et le poste de commande (112) étant disposé sur la plateforme (108), et dans lequel les moyens de détection (119) comportent des moyens de mesure du dévers du châssis (102), et/ou un ou des capteurs de détection de la configuration de la structure articulée (106), et/ou un ou des capteurs de position de la structure articulée (106) par rapport au châssis (102), et/ou un ou des capteurs de charge et/ou un ou des capteurs d'obstacle.

8. Système selon la revendication précédente, dans lequel le contrôleur (117) comporte des abaques sur une enveloppe de sécurité dudit dispositif commandé et/ou sur au moins une limite entre au moins deux zones de position de la structure articulée (106).

9. Procédé de fonctionnement d'un système selon l'une des revendications précédentes, comportant les étapes :
a) mesure de l'orientation relative entre l'élément d'interaction avec l'utilisateur et au moins une partie du dispositif commandé,
b) prise en compte par le contrôleur de ladite orientation relative mesurée à l'étape a),
c) envoi d'ordre aux moyens de stimulation haptiques,
d) génération d'une stimulation kinesthésique au niveau de l'élément d'interaction avec l'utilisateur, de sorte que l'élément d'interaction avec l'utilisateur ne soit déplaçable que selon une direction parallèle à la direction de déplacement de la au moins une partie du dispositif commandé.

10. Procédé de fonctionnement selon la revendication 9, dans lequel lors de l'étape a) le contrôleur prend en compte la position de l'élément d'interaction avec l'utilisateur, et avantageusement dans lequel, lorsque l'élément d'interaction comportant une position repos et étant apte à être déplacé au moins le long d'une direction donnée à partir de la position repos dans un premier sens et dans un deuxième sens opposé au premier sens, le contrôleur envoie des ordres aux moyens de stimulation haptiques de générer un première stimulations haptique, lors du déplacement de l'élément d'interaction avec l'utilisateur dans le premier sens, et une deuxième stimulation haptique lors du déplacement de l'élément d'interaction avec l'utilisateur dans le deuxième sens, les première et deuxième stimulations haptiques étant différentes.

11. Procédé de fonctionnement selon la revendication 9 ou 10, dans lequel, lors d'un fonctionnement conforme du dispositif commandé, ledit contrôleur envoie des ordres aux moyens de stimulation kinesthésique d'appliquer un effort résistant à l'élément d'interaction avec l'utilisateur, tant qu'il n'est pas déplacé suffisamment pour provoquer une action du dispositif commandé, et de simuler des crans lorsque le déplacement de l'élément d'interaction avec l'utilisateur provoque une action du dispositif commandé

12. Procédé de fonctionnement selon l'une des revendications 9 à 11, dans lequel le dispositif commandé comporte un châssis (102) et au moins une structure articulée (106), une plateforme (108) portée par la structure articulée(106):
- le contrôleur détermine une enveloppe de sécurité du dispositif commandé et/ou la présence d'obstacles,
- au-delà d'une configuration donnée de ladite plateforme par rapport à l'enveloppe de sécurité de la plateforme et/ou la présence d'obstacles, ledit contrôleur envoie des ordres aux moyens de stimulation haptiques de générer au moins une stimulation haptique pour alerter l'utilisateur.

13. Procédé de fonctionnement selon la revendication 12, dans lequel la stimulation haptique comporte une stimulation kinesthésique forçant l'utilisateur à appliquer un effort supplémentaire à l'élément d'interaction et une stimulation vibrotactile, et/ou dans lequel le contrôleur envoie un ordre de simuler une butée pour l'élément d'interaction, lorsque l'enveloppe de sécurité est atteinte et/ou lorsqu'au moins un des vérins d'actionnement de la structure élévatrice est en fin de course.

14. Procédé de fonctionnement selon l'une des revendications 9 à 13, dans lequel le contrôleur tient compte d'au moins une information relative à l'état du dispositif commandé et/ou de son environnement une stimulation haptique étant générée en tenant compte de ladite information.

15. Procédé de fonctionnement selon la revendication précédente et la revendication 12 ou 13, dans lequel le contrôleur détermine au moins une limite entre au moins deux zones de déploiement de la structure articulée, et envoie des ordres aux moyens de génération d'une stimulation haptique d'envoyer un message haptique à l'utilisateur pour l'informe du fait que ladite au moins une limite est proche ou franchie.

## Patentansprüche

1. System mit einer Kontrollstation und einer Vorrichtung, beispielweise einer Hubarbeitsbühne, die von der Kontrollstation gesteuert wird, wobei die Kontrollstation zumindest eine Steuervorrichtung (114) zum Steuern von zumindest einer Aktion der zu steuernden Vorrichtung umfasst, wobei die Steuervorrichtung (114) eine haptische Schnittstelle mit zumindest einem Element zur Interaktion mit dem Benutzer (4) umfasst, sowie einen Controller (117), der dazu ausgelegt ist, Befehle an die haptische Schnittstelle zu senden, um haptische Stimulationen am Element zur Interaktion mit dem Benutzer auf Grundlage zumindest von Informationen bezüglich eines Zustands der zu steuernden Vorrichtung und/oder ihrer Umgebung zu erzeugen, wobei die haptische Schnittstelle Mittel zum Erzeugen einer kinästhetischen Stimulation enthält,
**dadurch gekennzeichnet, dass**
das System ferner Mittel zum Messen der relativen Ausrichtung des Elements zur Interaktion mit dem Benutzer (4) und zumindest eines Teils der zu steuernden Vorrichtung enthält, und dass
der Controller (117) dazu ausgelegt ist, auf der Grundlage der Informationen, die von den Mitteln zur Messung der relativen Ausrichtung zwischen der Steuervorrichtung und der zu steuernden Vorrichtung bereitgestellt werden, die Mittel zur Erzeugung einer kinästhetischen Stimulation so zu steuern, dass die Steuervorrichtung nur in einer Richtung parallel zur Bewegungsrichtung des zumindest einen Teils der zu steuernden Vorrichtung beweglich ist.

2. System nach Anspruch 1,
wobei die Mittel zur Messung der relativen Ausrichtung zwischen dem Element zur Interaktion mit dem Benutzer (4) und dem zumindest einen Teil der zu steuernden Vorrichtung die relative Position des Elements zur Interaktion mit dem Benutzer (4) und zumindest eines Teils der zu steuernden Vorrichtung messen, wobei der Controller die Verlaufsrichtung und die Zielrichtung des Elements zur Interaktion mit dem Benutzer (4) und die Bewegungsrichtung des zumindest einen Teils der zu steuernden Vorrichtung verknüpft und/oder wobei die Mittel zur Messung der relativen Ausrichtung zwischen dem Element zur Interaktion mit dem Benutzer (4) und dem zumindest einen Teil der zu steuernden Vorrichtung zumindest einen Sensor enthalten, der eine Information über die Ausrichtung des Elements zur Interaktion mit dem Benutzer (4) bereitstellt, sowie zumindest einen Sensor, der eine Information über die Ausrichtung des zumindest einen zu steuernden Teils bereitstellt.

3. Steuerungssystem nach Anspruch 1 oder 2,
wobei der Controller (117) dazu ausgelegt ist, zumindest die Position des Elements zur Interaktion mit dem Benutzer (4) zu berücksichtigen.

4. Steuerungssystem nach einem der Ansprüche 1 bis 3,
wobei die Mittel zum Erzeugen einer kinästhetischen Stimulation (6, 8) zumindest eine magnetorheologische Bremse (16, 18) enthalten.

5. System nach einem der Ansprüche 1 bis 4,
wobei die haptische Schnittstelle Mittel zur Erzeugung einer vibrotaktilen Stimulation enthält, wobei die Mittel zur Erzeugung einer vibrotaktilen Stimulation vorteilhaft zumindest einen vibrierenden Aktuator (A1, A2, A3) umfassen, der vorteilhaft am Element zur Interaktion mit der Benutzer (4) positioniert ist.

6. System nach einem der Ansprüche 1 bis 5,
enthaltend weitere Steuervorrichtungen (115, 116), die gegebenenfalls eine haptische Schnittstelle enthalten.

7. System nach einem der vorangehenden Ansprüche,
enthaltend Mittel (119) zur Erfassung des Zustands der zu steuernden Vorrichtung und/oder ihrer Anordnung in Bezug auf die äußere Umgebung sowie Mittel zur Übertragung der von den Erfassungsmitteln ausgegebenen Signale an den Controller, damit dieser die Signale zum Steuern der haptischen Schnittstelle berücksichtigt, wobei die zu steuernde Vorrichtung vorteilhafterweise ein Fahrgestell (102) und zumindest eine Gelenkstruktur (106) umfasst sowie eine von der Gelenkstruktur (106) getragene Plattform (108), wobei die Kontrollstation (112) auf der Plattform (108) angeordnet ist, und wobei die Erfassungsmittel (119) Mittel zur Messung der Neigung des Fahrgestells (102) und/oder einen oder mehrere Sensoren zur Erfassung der Konfiguration der Gelenkstruktur (106) und/oder einen oder mehrere Sensoren zur Erfassung der Position der Gelenkstruktur (106) relativ zum Fahrgestell (102) und/oder einen oder mehrere Lastsensoren und/oder einen oder mehrere Hindernissensoren umfassen.

8. System nach dem vorangehenden Anspruch,
wobei der Controller (117) Diagramme bezüglich eines Sicherheitsmantels der zu steuernden Vorrichtung und/oder bezüglich zumindest einer Abgrenzung zwischen zumindest zwei Positionsbereichen der Gelenkstruktur (106) umfasst.

9. Verfahren zum Betreiben eines Systems nach einem der vorangehenden Ansprüche, umfassend die folgenden Schritte:
a) Messen der relativen Ausrichtung zwischen dem Element zur Interaktion mit dem Benutzer und zumindest einem Teil der zu steuernden Vorrichtung,
b) Berücksichtigen der in Schritt a) gemessenen relativen Ausrichtung durch den Controller,
c) Senden eines Befehls an die Mittel zur haptischen Stimulation,
d) Erzeugen einer kinästhetischen Stimulation am Element zur Interaktion mit dem Benutzer, so dass das Element zur Interaktion mit dem Benutzer nur in einer Richtung parallel zur Bewegungsrichtung des zumindest einen Teils der zu steuernden Vorrichtung beweglich ist.

10. Betriebsverfahren nach Anspruch 9,
wobei in Schritt a) der Controller die Position des Elements zur Interaktion mit dem Benutzer berücksichtigt und wobei vorteilhaft dann, wenn das Interaktionselement eine Ruhestellung aufweist und dazu geeignet ist, zumindest entlang einer gegebenen Richtung ausgehend von der Ruhestellung in einer ersten Zielrichtung und in einer der ersten Zielrichtung entgegengesetzten zweiten Zielrichtung verlagert zu werden, der Controller Befehle an die Mittel zur haptischen Stimulation sendet, um bei der Verlagerung des Elements zur Interaktion mit dem Benutzer in der ersten Zielrichtung eine erste haptische Stimulation zu erzeugen und bei der Verlagerung des Elements zur Interaktion mit dem Benutzer in der zweiten Zielrichtung eine zweite haptische Stimulation zu erzeugen, wobei die erste und die zweite haptische Stimulation sich voneinander unterscheiden.

11. Betriebsverfahren nach Anspruch 9 oder 10,
wobei bei einem ordnungsgemäßen Betrieb der zu steuernden Vorrichtung der Controller Befehle an die Mittel zur kinästhetischen Stimulation sendet, um eine gegenüber dem Element zur Interaktion mit dem Benutzer beständige Kraft aufzuwenden, solange es nicht weit genug verlagert wird, um eine Aktion der zu steuernden Vorrichtung zu bewirken, und Rasten zu simulieren, wenn die Verlagerung des Elements zur Interaktion mit dem Benutzer eine Aktion der zu steuernden Vorrichtung bewirkt.

12. Betriebsverfahren nach einem der Ansprüche 9 bis 11,
wobei die zu steuernde Vorrichtung ein Fahrgestell (102) und zumindest eine Gelenkstruktur (106) und eine von der Gelenkstruktur (106) getragene Plattform (108) umfasst, wobei
- der Controller einen Sicherheitsmantel der zu steuernden Vorrichtung und/oder das Vorhandensein von Hindernissen ermittelt,
- jenseits einer gegebenen Konfiguration der Plattform in Bezug auf den Sicherheitsmantel der Plattform und/oder bei Vorhandensein von Hindernissen der Controller den Mitteln zur haptischen Stimulation Befehle sendet, um zumindest eine haptische Stimulation zum Warnen des Benutzers zu erzeugen.

13. Betriebsverfahren nach Anspruch 12,
wobei die haptische Stimulation eine kinästhetische Stimulation umfasst, die den Benutzer dazu zwingt, eine zusätzliche Kraft auf das Interaktionselement aufzubringen, sowie eine vibrotaktile Stimulation, und/oder wobei der Controller einen Befehl aussendet, einen Anschlag für das Interaktionselement zu simulieren, wenn der Sicherheitsmantel erreicht ist und/oder wenn zumindest einer der Betätigungskraftzylinder der Hebestruktur sich am Verlagerungsende befindet.

14. Betriebsverfahren nach einem der Ansprüche 9 bis 13,
wobei der Controller zumindest eine Information bezogen auf den Zustand der zu steuernden Vorrichtung und/oder ihre Umgebung berücksichtigt, wobei eine haptische Stimulation unter Berücksichtigung der Information erzeugt wird.

15. Betriebsverfahren nach dem vorangehenden Anspruch und nach Anspruch 12 oder 13,
wobei der Controller zumindest eine Abgrenzung zwischen zumindest zwei Auslenkbereichen der Gelenkstruktur ermittelt und Befehle an die Mittel zur Erzeugung einer haptischen Stimulation sendet, um eine haptische Nachricht an den Benutzer zu senden, um ihm mitzuteilen, dass die zumindest eine Abgrenzung nahe oder überschritten ist.

## Claims

1. A system including a control station and a device, for example an aerial lift, controlled by said control station, said control station including at least one control device (114) for controlling at least one action of the controlled device, said control device (114) comprising a haptic interface comprising at least one user interaction element (4), and a controller (117) configured to send commands to the haptic interface to generate haptic stimulations at the user interaction element based at least on information relating to a state of the controlled device and/or its environment, said haptic interface includes means for generating a kinaesthetic stimulation, **characterized in that** the system also includes means for measuring the relative orientation of the user interaction element (4) and at least one part of the controlled device, and int that the controller (117) is configured such that, based on the information provided by the means for measuring the relative orientation between the control device and the controlled device, it controls the means for generating a kinaesthetic stimulation such that the control device is only displaceable along a direction parallel to the direction of displacement of said at least one part of the controlled device.

2. The system according to claim 1, wherein the means for measuring the relative orientation between the user interaction element (4) and the at least one part of the controlled device measure the relative position of the user interaction element (4) and at least one part of the controlled device, and wherein the controller links the direction and sense of the user interaction element (4) and the sense of displacement of the at least one part of the controlled device, and/or wherein the means for measuring the relative orientation between the user interaction element (4) and the at least one part of the controlled device include at least one sensor providing an orientation piece of information of the user interaction element (4), and at least one sensor providing an orientation piece of information of said at least one controlled part.

3. The control system according to claim 1 or 2, wherein the controller (117) is configured to take at least the position of the user interaction element (4) into account.

4. The system according to one of claims 1 to 3, wherein the means for generating a kinaesthetic stimulation (6, 8) include at least one magnetorheological brake (16, 18).

5. The system according to one of claims 1 to 5, wherein the haptic interface includes means for generating a vibrotactile stimulation, the means for generating a vibrotactile stimulation including advantageously at least one vibrating actuator (A1, A2, A3), which is advantageously positioned on the user interaction element (4).

6. The system according to one of claims 1 to 4, including other control devices (115, 116) including a haptic interface or not.

7. The system according to one of the preceding claims, including means (119) for detecting the state of the controlled device and/or its arrangement with respect to the external environment and means for transmitting the signals emitted by the detection means to the controller such that it takes the signals into account to control the haptic interface, the controlled device advantageously including a chassis (102) and at least one hinged structure (106), a platform (108) carried by the hinged structure (106) and at least one control station (112) according to one of claims 1 to 7 disposed on the platform (108), and wherein the detection means (119) include means for measuring the superelevation of the chassis (102), and/or one or more sensors for detecting the configuration of the hinged structure (106), and/or one or more position sensors of the hinged structure (106) with respect to the chassis (102), and/or one or more load sensors and/or one or more obstacle sensors.

8. The system according to the preceding claim, wherein the controller (117) includes charts on a safety work envelope of said controlled device and/or on at least one boundary between at least two position zones of the hinged structure (106).

9. A method for operating a system according to one of the preceding claims, including the steps of:
a) measuring the relative orientation between the user interaction element and at least one part of the controlled device,
b) taking said relative orientation measured in step a) into account by the controller,
c) sending command to the haptic stimulation means,
d) generating a kinaesthetic stimulation at the user interaction element, such that the user interaction element is only displaceable along a direction parallel to the direction of displacement of the at least one part of the controlled device.

10. The operating method according to claim 9, wherein during step a), the controller takes the position of the user interaction element into account, and advantageously wherein, the interaction element including a rest position and being able to be displaced at least along a given direction from the rest position in a first sense and in a second sense opposite to the first sense, and wherein the controller sends commands to the haptic stimulation means to generate a first haptic stimulation, during the displacement of the user interaction element in the first sense, and a second haptic stimulation during the displacement of the user interaction element in the second sense, the first and second haptic stimulations being different.

11. The operating method according to claim 9 or 10, wherein, during a compliant operation of the controlled device, said controller sends commands to the kinaesthetic stimulation means to apply a resisting strain to the user interaction element, as long as it is not sufficiently displaced to cause an action of the controlled device, and to simulate notches when the displacement of the user interaction element causes an action of the controlled device.

12. The operating method according to one of claims 9 to 11, wherein the controlled device includes a chassis (102) and at least one hinged structure (106), a platform (108) carried by the hinged structure (106):
- the controller determines a safety work envelope of the controlled device and/or the presence of obstacles,
- beyond a given configuration of said platform with respect to the safety work envelope of the platform and/or the presence of obstacles, said controller sends commands to the haptic stimulation means to generate at least one haptic stimulation to alert the user.

13. The operating method according to claim 12, wherein the haptic stimulation includes a kinaesthetic stimulation forcing the user to apply a further strain to the interaction element and a vibrotactile stimulation, and/or wherein the controller sends a command to simulate a stop for the interaction element, when the safety work envelope is reached and/or when at least one of the actuating cylinders of the aerial structure is at stroke end.

14. The operating method according to one of claims 9 to 13, wherein the controller takes account of at least one piece of information relating to the state of the controlled device and/or its environment, a haptic stimulation being generated by taking account of said piece of information.

15. The operating method according to the preceding claim and claim 12 or 13, wherein the controller determines at least one boundary between at least two deployment zones of the hinged structure, and sends commands to the means for generating a haptic stimulation to send a haptic message to the user to inform him/her that said at least one boundary is close or crossed.
